(19) Europäisches Patentamt
European Patent Office
Office européen des brevets

(11) EP 4 741 455 A2

(12) # EUROPÄISCHE PATENTANMELDUNG

(43) Veröffentlichungstag:
**13.05.2026 Patentblatt 2026/20**

(21) Anmeldenummer: **26165109.5**

(22) Anmeldetag: **22.07.2022**

(51) Internationale Patentklassifikation (IPC):
***C08K 5/3492*** *(2006.01)*

(52) Gemeinsame Patentklassifikation (CPC):
**C09K 21/12; C08K 5/34928**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2021 DE 102021119326**

(62) Dokumentnummer(n) der früheren Anmeldung(en) nach Art. 76 EPÜ:
**22747716.3 / 4 377 419**

(27) Früher eingereichte Anmeldung:
**22.07.2022 EP PCT/EP2022/070676**

(71) Anmelder: **Chemische Fabrik Budenheim KG**
**55257 Budenheim (DE)**

(72) Erfinder:
- **Futterer, Thomas**
  **55218 Ingelheim (DE)**
- **Garcia Martinez, David**
  **50013 Zaragoza (ES)**
- **Moschel, Sebastian**
  **64521 Groß-Gerau (DE)**
- **Rochholz, Heiko**
  **55452 Rümmelsheim (DE)**
- **Moss, Tobias**
  **64295 Darmstadt (DE)**
- **Abele, Bors Cajus**
  **55126 Mainz (DE)**

(74) Vertreter: **WSL Patentanwälte Partnerschaft mbB**
**Kaiser-Friedrich-Ring 98**
**65185 Wiesbaden (DE)**

Bemerkungen:
Diese Anmeldung ist am 16.03.2026 als Teilanmeldung zu der unter INID-Code 62 erwähnten Anmeldung eingereicht worden.

(54) **NEUARTIGES FLAMMSCHUTZMITTEL**

(57) Die Erfindung betrifft ein Flammschutzmittel, eine Kunststoffzusammensetzung umfassend dieses Flammschutzmittel sowie ein Polyphosphatsalz.

EP 4 741 455 A2

## Beschreibung

### Gegenstand der Erfindung

Die Erfindung betrifft ein Flammschutzmittel, eine Kunststoffzusammensetzung umfassend dieses Flammschutzmittel sowie ein Polyphosphatsalz.

### Hintergrund der Erfindung

Zur Flammschutzausrüstung von Kunststoffen sind zahlreiche Substanzen bekannt, die alleine oder in Kombination mit weiteren Substanzen eingesetzt werden können, die ähnliche oder synergistische Flammschutzeigenschaften bereitstellen.

Aus dem Stand der Technik ist beispielsweise die Verwendung von Polyphosphatsalzen von 1,3,5-Triazinverbindungen für solche Anwendungen bekannt. Diese werden insbesondere in Polyamide und Polyester (mit und ohne Glasfasern), die typischerweise im Spritzguss, d.h. bei erhöhten Temperaturen, verarbeitet werden, mit Hilfe der Kunststoffextrusion eingearbeitet.

Aus der WO 00/02869 A1 sind solche Polyphosphatsalze von 1,3,5-Triazinverbindungen bekannt, die einen mittleren Kondensationsgrad (Zahlenmittel) > 20 und ein Molverhältnis von Triazinverbindung zu Phosphor (M/P) von < 1,1 besitzen.

Die EP 0 974 588 B1 beschreibt 1,3,5-Triazinderivate von Polysäuren die Phosphor, Schwefel und Sauerstoff enthalten sowie ein Verfahren zu deren Herstellung. Das Verhältnis von 1,3,5-Triazinverbindung zu Phosphor in den offenbarten Triazinpolyphosphatderivaten ist > 1,1.

Auch die EP 1 095 030 B1 beschreibt ein Polyphosphatsalz einer 1,3,5-Triazinverbindung. Dieses weist einen 1,3,5-Triazingehalt von 1,1 bis 2,0 mol einer Triazinverbindung ausgewählt aus der Gruppe bestehend aus Melamin, Melam, Melem, Melon, Ammelin, Ammelid, 2-Ureidomelamin, Acetoguanamin, Benzoguanamin und Diaminphenyltriazin, pro Mol Phosphoratom auf.

Durch diese aus dem Stand der Technik bekannten Polyphosphatsalze lässt sich im Allgemeinen nur eine mäßige Flammschutzwirkung bei Einarbeitung in eine zu schützende Zusammensetzung erzielen. Darüber hinaus neigen diese Phosphatsalze dazu, über die Zeit aus dem Material zu migrieren. Hierdurch wird nicht nur die flammschützende Wirkung noch weiter verringert, mit der Freisetzung sind auch gesundheitliche Risiken verbunden, insbesondere in Haushaltsanwendungen. Darüber hinaus führt die Verarbeitung des Produktes mit Hilfe eines Extruders, gerade bei Temperaturen über 250°C, zu einer Zersetzung des Flammschutzmittels und einer rauen Oberfläche des extrudierten Materials. Dieser Effekt ist besonders ausgeprägt, wenn das Flammschutzmittel in einen glasfaserverstärkten Kunststoff eingearbeitet wird. Besonders schwierig gestaltet sich die Verarbeitung, wenn neben dem primären Flammschutzmittel und den Füllstoffen noch weitere synergistische Flammschutzmittel enthalten sind, beispielsweise Produkte basierend auf Phosphinaten wie Aluminiumdiethylphosphinat.

### AUFGABE

Vor diesem Hintergrund bestand die Aufgabe der vorliegenden Erfindung daher darin, ein vorzugsweise halogenfreies, umweltfreundliches und insbesondere recyclierbares Flammschutzmittel auf Basis eines Polyphosphatsalzes der vorgenannten Art bereitzustellen, das ähnliche oder sogar bessere Flammschutzeigenschaften als die aus dem Stand der Technik bekannten aufweist und das darüber hinaus eine geringere Migrationsneigung aufweist, sodass ein dauerhafter und gesundheitlich unbedenklicher Flammschutz insbesondere für Polymermaterialien erzielt werden kann. Die vorliegende Erfindung soll zudem eine uneingeschränkte Verarbeitbarkeit des Polymermaterials, welches das Flammschutzmittel enthält, selbst bei einer mehrschrittigen Prozessierung, auch bei hohen Temperaturen, gewährleisten.

### Beschreibung der Erfindung

Diese Aufgabe wird durch ein Flammschutzmittel gemäß Anspruch 1 gelöst.

Das erfindungsgemäße Flammschutzmittel umfasst mindestens ein Polyphosphatsalz, das Kationen mindestens einer 1,3,5-Triazinverbindung aufweist, wobei eine dieser 1,3,5-Triazinverbindungen Melamin ist. Es handelt sich hierbei also um ein Polyphosphatsalz einer 1,3,5-Triazinverbindung. Vorzugsweise umfasst das Polyphosphatsalz Kationen von zwei oder mehr 1,3,5-Triazinverbindungen. Bei den "Kationen mindestens einer 1,3,5-Triazinverbindung" des Polyphosphatsalzes handelt es sich vorzugsweise um die durch Protonierung erhaltenen korrespondierenden Kationen der 1,3,5-Triazinverbindung(en). In der Regel sind dies die korrespondierenden Ammoniumionen der zumeist Aminogruppen-aufweisenden 1,3,5-Triazinverbindung(en) wie Melamin, Melam oder Melem.

Das Flammschutzmittel weist erfindungsgemäß weiterhin mindestens ein, d.h. ein oder mehrere Kondensationsprodukte von Melamin auf.

Unter "Kondensationsprodukt" von Melamin werden Moleküle verstanden, die durch eine Kondensationsreaktion von zwei oder mehr Melaminmolekülen entstanden sind, wie z.B. Melam, Melem oder Melon. Von dem Begriff umfasst sind auch die protonierten Formen dieser Verbindungen, d.h. die durch Protonierung erhaltenen korrespondierenden Kationen.

In einer bevorzugten Ausführung der Erfindung weist das erfindungsgemäße Flammschutzmittel eine solche kationische Form eines Kondensationsproduktes von Melamin auf, wobei dieses Kation vorzugsweise ein Kation des Polyphosphatsalzes ist, d.h. eine weitere der mindestens einen 1,3,5-Triazinverbindung des Polyphosphatsalzes. Das Polyphosphatsalz weist dann also mindestens Kationen von Melamin und einem Kondensationsprodukt von Melamin, wie Melam, auf. In diesem Fall kann das Flammschutzmittel ausschließlich aus dem Polyphosphatsalz bestehen. Ein solches Polyphosphatsalz kann durch Zugabe des Kondensationsproduktes von Melamin bei der Herstellung erhalten werden.

In einer anderen Ausführung kann das Flammschutzmittel, dass das Kondensationsprodukt von Melamin in Form eines an das Polyphosphatsalz gebundenen Kations enthält, noch weitere Komponenten umfassen.

Das Kondensationsprodukt kann im Flammschutzmittel jedoch auch als eine zum Polyphosphatsalz zusätzliche Komponente vorliegen, sodass das Flammschutzmittel eine Zusammensetzung ist, die sowohl das Polyphosphatsalz als auch das Kondensationsprodukt von Melamin und ggf. weitere Komponenten umfasst. In einer solchen Zusammensetzung kann das Kondensationsprodukt in nicht-ionischer Form und/oder als Kation eines Salzes vorliegen, das nicht das Polyphosphatsalz ist.

Natürlich kann das Flammschutzmittel auch eine Kombination der obigen Ausführungen darstellen, d.h. eines der Kationen des Polyphosphatsalzes ist die protonierte Form eines Kondensationsproduktes von Melamin und das Flammschutzmittel weist als zusätzliche Komponente mindestens ein Kondensationsprodukt von Melamin in nicht-ionischer Form und/oder als Kation eines zusätzlichen Salzes auf.

Das Polyphosphatsalz des erfindungsgemäßen Flammschutzmittels kann vereinfacht durch die folgende allgemeine Formel wiedergegeben werden:

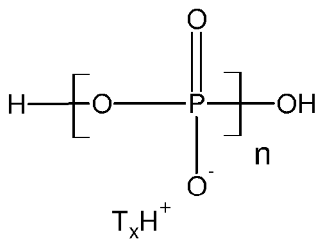

wobei "$T_x$" mindestens eine 1,3,5-Triazinverbindung darstellt und "n" den mittleren Kondensationsgrad angibt. Die Kettenenden des Polyphosphatsalzes (in obiger Strukturformel durch - H bzw. -OH gebildet) können auch von einer 1,3,5-Triazinverbindung gebildet werden.

Die Erfinder konnten feststellen, dass die erfindungsgemäße Kombination aus einem Polyphosphatsalz, das Kationen von Melamin umfasst, und mindestens einem Kondensationsprodukt von Melamin besonders ausgeprägte Flammschutzeigenschaften aufweist. Darüber hinaus wird das Migrationsverhalten des Polyphosphatsalzes durch eine solche Kombination vorteilhaft beeinflusst, d.h. das Polyphosphatsalz wird zu einem deutlich geringeren Maße aus dem zu schützenden Material, insbesondere aus einem Polymermaterial, ausgewaschen.

Ohne an diese Theorie gebunden zu sein, gehen die Erfinder davon aus, dass das Kondensationsprodukt von Melamin über Wasserstoffbrückenbindungen die einzelnen Makromoleküle des Polyphosphatsalzes miteinander verbrückt, d.h. durch die intermolekularen Wechselwirkungen größere supramolekulare Agglomerate gebildet werden, die deutlich schwerer aus dem Material migrieren. Das Kondensationsprodukt wirkt daher als eine Art "supramolekularer Vernetzer" und verstärkt somit die Verankerung des flammschützenden Polyphosphatsalzes in oder auf dem zu schützenden Matrixmaterial, in welches das Flammschutzmittel eingearbeitet oder auf das dieses aufgebracht wird.

Das mindestens eine Kondensationsprodukt von Melamin stabilisiert zudem das Polyphosphatsalz. Bei synergistischen Kombinationen mit sauren Flammschutzmitteln wie den eingangs erwähnten Aluminiumphosphinaten finden beispielsweise keine Säure-Base-Austauschreaktionen statt, so dass diese Kombinationen auch bei hohen Temperaturen, wie sie bei der Extrusion üblich sind, ohne Zersetzung des Polyphosphatsalzes einsetzbar sind.

Bei reinem Melaminpolyphosphat kann das Melamin-Kation hingegen im ersten Schritt durch das stärker saure Aluminium-Kation ersetzt werden. Das Melamin kann dann ggf. sublimieren und Phosphinsäure freisetzen.

Darüber hinaus weisen kondensierte Melamin-Derivate eine deutlich höhere Zersetzungstemperatur (> 600°C) auf und sind daher stabiler als Melamin (Zersetzungstemperatur > 350°C) während der Kunststoffverarbeitung.

Das erfindungsgemäße Flammschutzmittel gewährleistet in der Folge eine uneingeschränkte Verarbeitbarkeit

des Kunststoffes, selbst bei einer Verarbeitung über mehrere Prozessschritte und bei hohen Temperaturen.

Während der flammgeschützte Kunststoff innerhalb der Wertschöpfungskette mehrfach umgeformt und verarbeitet wird (Extrusion, Spritzguss, etc.), werden die physikalischen Eigenschaften des Kunststoffes nicht oder nur unwesentlich verändert.

Zusätzlich eignen sich Kunststoffe, welche der Erfindung entsprechende Flammschutzmittel enthalten, auch in hervorragender Weise, um in einer angestrebten Kreislaufwirtschaft für Kunststoffe recycelt zu werden, da auf toxische und/oder schwer biologisch abzubauende Flammschutzmittel verzichtet werden kann.

Besonders bevorzugt ist das mindestens eine Kondensationsprodukt von Melamin als eines der Kationen des Polyphosphatsalzes im Flammschutzmittel enthalten, d.h. das Kondensationsprodukt des Melamins ist eine der mindestens einen 1,3,5-Triazinverbindung, deren Kationen das Polyphosphatsalz aufweist.

Ein solches Polyphosphatsalz kann mit nachfolgender Strukturformel dargestellt werden:

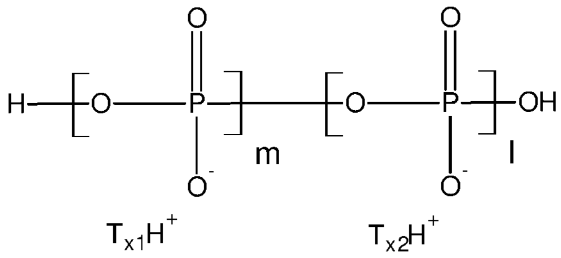

wobei "$T_{x1}$" Melamin ist und "$T_{x2}$" das Kondensationsprodukt von Melamin, wie z.B. Melam, ist. Die Kettenenden des Polyphosphatsalzes (in obiger Strukturformel durch -H bzw. -OH gebildet) können auch von einer 1,3,5-Triazinverbindung gebildet werden. Eine der möglichen Resonanzstrukturen der protonierten Form von Melam, d.h. eines möglichen $T_{x2}H^+$, ist nachfolgend dargestellt:

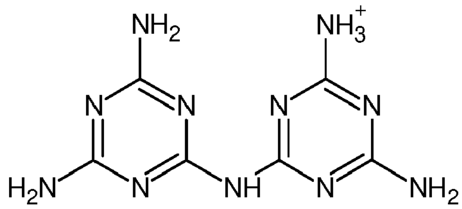

Eine der möglichen Resonanzstrukturen der protonierten Form von Melem, d.h. eines möglichen $T_{x2}H^+$, ist nachfolgend dargestellt:

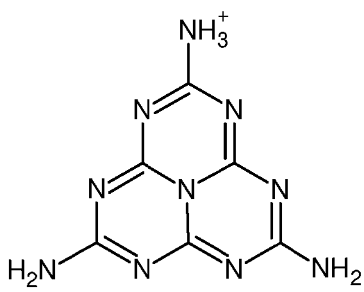

Bei Ausführungen bei denen das Kondensationsprodukt von Melamin eines der Kationen des Polyphosphatsalzes ist, sind die erfindungsgemäßen Effekte besonders ausgeprägt. Ohne an diese Theorie gebunden zu sein, gehen die Erfinder davon aus, dass durch die in diesem Fall bereits vorhandene Bindung an mindestens ein Makromolekül des Polyphosphatsalzes leichter supramolekulare Agglomerate mit weiteren Makromolekülen des Polyphosphatsalzes gebildet werden können, welche die Stabilität während der Verarbeitung erhöhen.

In einer besonders bevorzugten Ausführungsform der Erfindung weist das Flammschutzmittel einen Mindestgehalt an Stoffmenge des Kondensationsproduktes in Relation zur Stoffmenge des Kations von Melamin des Polyphosphatsalzes auf.

Die im Flammschutzmittel enthaltene Stoffmenge des Kations von Melamin beträgt X, die im Flammschutzmittel (z.B. als Kation des Polyphosphatsalzes) enthaltene Stoffmenge des Kondensationsproduktes von Melamin beträgt Y. Die Summe dieser beiden Komponenten ergibt sich folglich aus X+Y. Der Anteil der Stoffmenge des Kondensationsproduktes an dieser Summe beträgt bevorzugt mindestens 0,1%, d.h.

$$\frac{Y}{X+Y} \geq 0{,}001$$

Bevorzugter beträgt der Stoffmengenanteil von Y mindestens 1%, stärker bevorzugt mindestens 2%, besonders bevorzugt mindestens 3%, noch stärker bevorzugt mindestens 5%, und am bevorzugtesten mindestens 10%.

Bevorzugt beträgt der Stoffmengenanteil von Y höchstens 50%, stärker bevorzugt höchstens 20%, besonders bevorzugt höchstens 15 %, noch stärker bevorzugt höchstens 12 %, und am bevorzugtesten höchstens 10%.

Der Stoffmengenanteil von Y liegt vorzugsweise im Bereich von 0,1 bis 20 %, stärker bevorzugt im Bereich von 1 bis 15%, noch stärker bevorzugt im Bereich von 2 bis 12 % und am bevorzugtesten im Bereich von höchstens 5 bis 10%.

Der mittlere Kondensationsgrad n des Polyphosphatsalzes beträgt vorzugsweise mindestens 10, stärker bevorzugt mindestens 20, noch stärker bevorzugt mindestens 50 und am bevorzugtesten mindestens 100. Ein höherer Kondensationsgrad verstärkt den erfindungsgemäßen Effekt, da hierdurch größere Agglomerate von Polyphosphatsalz und Kondensationsprodukt entstehen und somit die Migrationsneigung des Polyphosphatsalzes noch weiter verringert wird.

Der mittlere Kondensationsgrad n des Polyphosphatsalzes kann nach bekannten Methoden ermittelt werden, wie beispielsweise mit Hilfe von NMR-Spektroskopie, J. Am. Chem. Soc. 78, 5715 (1956).

Der mittlere Kondensationsgrad wird auch als mittlere Kettenlänge des Polyphosphatsalzes bezeichnet.

Das Kondensationsprodukt von Melamin ist vorzugsweise ausgewählt aus der Gruppe bestehend aus Melam, Melem oder Melon. Aufgrund seiner linearen Struktur ist Melam besonders zur Verknüpfung der Makromoleküle des Polyphosphatsalzes geeignet und daher besonders bevorzugt.

Eine 10 Gew.%-ige wässrige Aufschlämmung des Flammschutzmittels umfassend das Polyphosphat weist vorzugsweise einen pH-Wert bei 25°C ≥ 5 auf. Der pH-Wert wird in einer 10 Gew.-%-igen wässrigen Aufschlämmung des erfindungsgemäßen Flammschutzmittels bestimmt, indem 25 g des Flammschutzmittels und 225 g reines Wasser von 25°C in einem Gefäß gerührt werden und mit üblichen Mitteln wie einem pH-Meter oder einem Indikatorpapier der pH-Wert der entstandenen wässrigen Suspension bestimmt wird. Besonders bevorzugt ist der pH-Wert im Bereich von 5 bis 10, stärker bevorzugt 5 bis 8, und am bevorzugtesten 5 bis 7.

Vorzugsweise weist eine 10 Gew.%-ige wässrige Aufschlämmung des Polyphosphats des erfindungsgemäßen Flammschutzmittels einen pH-Wert bei 25°C ≥ 5 auf. Besonders bevorzugt ist der pH-Wert im Bereich von 5 bis 10, stärker bevorzugt 5 bis 8, und am bevorzugtesten 5 bis 7.

Durch einen pH-Wert des Flammschutzmittels und/oder des Polyphosphatsalzes in den oben definierten Bereichen werden Wechselwirkungen mit dem zu schützenden Matrixmaterial, inklusive den darin enthaltenden synergistischen Flammschutzmitteln, möglichst gering gehalten. In der Folge kann das Flammschutzmittel in einer Vielzahl unterschiedlicher Matrixmaterialien, insbesondere in pH-sensitiven Matrixmaterialien, eingesetzt werden.

Die flammschützende Aktivität und insbesondere die Stabilität des Flammschutzmittels während der Verarbeitung kann durch Steuerung des Stoffmengenverhältnisses von der Summe der Stoffmengen der mindestens einen 1,3,5-Triazinverbindung und der Stoffmenge des Kondensationsproduktes zu der Stoffmenge von Phosphor des Polyphosphatsalzes verbessert werden. Dieses Verhältnis wird in der einschlägigen Literatur auch als M/P-Verhältnis bezeichnet. Bei der Summe der Stoffmengen der mindestens einen 1,3,5-Triazinverbindung und der Stoffmenge des Kondensationsproduktes von Melamin werden auch die protonierten Formen, wie z.B. die an das Polyphosphatsalz gebundene protonierte Form von Melamin, berücksichtigt.

Die Erfinder konnten feststellen, dass bei einem M/P-Verhältnis ≤ 1,3, vorzugsweise ≤ 1,2, stärker bevorzugt ≤ 1,1, besonders gute flammschützende Eigenschaften und eine herausragende Verarbeitbarkeit des geschützten Polymermaterials erhalten werden.

Das erfindungsgemäße Polyphosphatsalz muss nicht ausschließlich Kationen der mindestens einen 1,3,5-Triazinverbindung aufweisen, sondern kann auch weitere Kationen, wie beispielsweise Ammoniumionen, umfassen. Um die flammschützende Wirkung zu maximieren, wird der Großteil der Kationen jedoch bevorzugt von Kationen der mindestens einen 1,3,5-Triazinverbindung gebildet.

In einer besonders bevorzugten Ausführungsform beträgt der Stoffmengenanteil der Kationen der mindestens einen 1,3,5-Triazinverbindung an der Stoffmenge der Kationen des Polyphosphatsalzes vorzugsweise ≥ 50%, stärker bevorzugt ≥ 70%, noch stärker bevorzugt ≥ 80%, besonders stark bevorzugt ≥ 90% und am bevorzugtesten ≥ 95%. In einer Ausführung weist das Polyphosphatsalz ausschließlich Kationen der mindestens einen 1,3,5-Triazinverbindung auf.

Der Stoffmengenanteil der Kationen von Melamin an den Kationen der mindestens einen 1,3,5-Triazinverbindung beträgt vorzugsweise ≥ 50%, stärker bevorzugt ≥ 70%, noch stärker bevorzugt ≥ 80%, und am bevorzugtesten ≥ 90%.

Sofern das Polyphosphatsalz Kationen eines Kondensationsproduktes von Melamin umfasst, so beträgt der Stoffmengenanteil dieser Kationen an der Stoffmenge der Kationen des Polyphosphatsalzes vorzugsweise ≥ 5%, stärker

bevorzugt ≥ 10%, noch stärker bevorzugt ≥ 15%, und am bevorzugtesten ≥ 20%.

Wie bereits beschrieben, zeichnet sich das erfindungsgemäße Polyphosphatsalz durch ein besonders vorteilhaftes Migrationsverhalten und eine hohe Stabilität bei der Verarbeitung aus. Auch durch Lösemittel wie Wasser kann das erfindungsgemäße Flammschutzmittel nicht oder nur zu einem äußerst geringem Maße aus dem Matrixmaterial, in das das Flammschutzmittel eingearbeitet wird, entfernt werden. Dieser Effekt ist besonders stark ausgeprägt, wenn das erfindungsgemäße Flammschutzmittel eine äußerst geringe Wasserlöslichkeit aufweist. Dies ist von größter Bedeutung für Kunststoffprodukte, insbesondere im Außenbereich oder bei Anwendungen mit hoher Raumfeuchte.

Die Wasserlöslichkeit des erfindungsgemäßen Flammschutzmittels liegt vorzugsweise unter 0,1 g/100 ml, stärker bevorzugt ≤ 0,05 g/100 ml. Die Wasserlöslichkeit wird in diesem Zusammenhang dadurch bestimmt, dass eine 10 Gew.%-ige wässrige Aufschlämmung des Flammschutzmittels in Wasser bei 25 °C hergestellt und nach 24 h gemessen wird, wieviel des erfindungsgemäßen Flammschutzmittels sich in Wasser gelöst haben.

Die Wasserlöslichkeit des Polyphosphatsalzes des erfindungsgemäßen Flammschutzmittels liegt vorzugsweise unter 0,1 g/100 ml, stärker bevorzugt ≤ 0,05 g/100 ml.

Das erfindungsgemäße Flammschutzmittel zeichnet sich durch eine außerordentlich hohe Zersetzungstemperatur aus. Die Zersetzungstemperatur kann durch Thermogravimetrische Analyse (**Thermogravimetric Analysis - TGA**) bestimmt werden.

In einer bevorzugten Ausführungsform der Erfindung liegt die Zersetzungstemperatur, d.h. die Temperatur, bei der bei einer DSC-Messung ein Masseverlust des trockenen Flammschutzmittels von 2 Gew-% bei einer Heizrate von 10 K/min eintritt, oberhalb von 300°C, besonders bevorzugt oberhalb von 320°C, noch stärker bevorzugt oberhalb von 350°C.

Bevorzugt liegt die Zersetzungstemperatur des Polyphosphatsalzes des erfindungsgemäßen Flammschutzmittels, d.h. die Temperatur, bei der bei einer DSC-Messung ein Masseverlust des trockenen Flammschutzmittels von 2 Gew-% bei einer Heizrate von 10 K/min eintritt, oberhalb von 300°C, besonders bevorzugt oberhalb von 320°C, noch stärker bevorzugt oberhalb von 350°C.

In einer bevorzugten Ausführungsform enthält das Flammschutzmittel wenigstens eine weitere flammschützende Komponente, die vorzugsweise ausgewählt ist unter Stickstoffbasen, Melaminderivaten, Phosphaten, Pyrophosphaten, Polyphosphaten, organischen und anorganischen Phosphinaten, organischen und anorganischen Phosphonaten und Derivaten der vorgenannten Verbindungen, vorzugsweise ausgewählt unter Ammoniumpolyphosphat, mit Melamin, Melaminharz, Melaminderivaten, Silanen, Siloxanen, Silikonen oder Polystyrolen beschichteten und/oder beschichteten und vernetzten Ammoniumpolyphosphatpartikeln, sowie 1,3,5-Triazinverbindungen, einschließlich Melamin, Melam, Melem, Melon, Ammelin, Ammelid, 2-Ureidomelamin, Acetoguanamin, Benzoguanamin, Diaminphenyltriazin, Melaminsalze und -addukte, Melamincyanurat, Melaminborat, Melaminorthophosphat, Melaminpyrophosphat, Dimelaminpyrophosphat, Aluminiumdiethylphosphinat, Melaminpolyphos-phat, oligomere und polymere 1,3,5-Triazinverbindungen und Polyphosphate von 1,3,5-Triazinverbindungen, Guanin, Piperazinphosphat, Piperazinpolyphosphat, Ethylendiaminphosphat, Pentaerythritol, Dipentaerythritol, Borphosphat, Zinkborat, Zinkphosphat, Zinkpyrophosphat, 1,3,5-Trihydroxyethylisocyanurat, 1,3,5-Triglycidylisocyanurat, Triallylisocyanurat und Derivaten der vorgenannten Verbindungen. In einer bevorzugten Ausführungsform enthält das Flammschutzmittel für eine bessere Dispergierbarkeit der weiteren Flammschutzkomponente Wachse, Silikone, Siloxane, Fette oder Mineralöle.

Das erfindungsgemäße Flammschutzmittel kann auch weitere Polyphosphatsalze enthalten, wobei das Polyphosphatsalz vorzugsweise Kationen von mindestens einer 1,3,5-Triazinverbindung aufweist.

Außerdem können anorganische Pigmente und Füllstoffe ($TiO_2$, $Al_2O_3$, $Ba_2SO_4$, oder Ähnliches) im erfindungsgemäßen Flammschutzmittel enthalten sein. Besonders bevorzugt sind anorganische Pigmente, die zum Laserschweißen, zur Laserbeschriftung oder zur Laserstrukturierung dienen. Beispielhaft genannt seien Kupfersalze wie Kupferhydroxidphosphat, Kupferpyrophosphat oder ähnliche Vertreter.

Besonders bevorzugt umfasst das erfindungsgemäße Flammschutzmittel wenigstens eine Verbindung ausgewählt aus der Gruppe bestehend aus Phosphinaten, Diphosphinaten wie Aluminiumdiethylphosphinat, Zinkboraten und Zinkphosphaten.

In einer bevorzugten Ausführungsform beträgt das Verhältnis von Polyphosphatsalz zu der wenigstens einen weiteren Flammschutzkomponente in dem Flammschutzmittel 1:18 bis 1:4, stärker bevorzugt 1:9 bis 1:2, noch stärker bevorzugt 1:6 bis 1:1,5 und besonders bevorzugt 1:4 bis 1:1,25.

Besonders bevorzugt ist das erfindungsgemäße Flammschutzmittel halogenfrei. Halogenfrei bedeutet in diesem Zusammenhang, dass der Gewichtsanteil von Halogen an dem Gewicht des Flammschutzmittels ≤ 1 Gew.-%, bevorzugt ≤ 0,5 Gew.-%, besonders bevorzugt ≤ 0,2 Gew.-% und am bevorzugtesten ≤ 0,1 Gew.-% beträgt.

In einer bevorzugten Ausführungsform der Erfindung ist das Polyphosphatsalz des Flammschutzmittels halogenfrei, d.h. es weist einen Gehalt an Halogenen ≤ 1 Gew.-% auf, vorzugsweise ≤ 0,5 Gew.-%, stärker bevorzugter ≤ 0,2 Gew.-%, und am bevorzugtesten ≤ 0,1 Gew.-%.

Die vorliegende Erfindung betrifft auch eine Kunststoffzusammensetzung umfassend eine Kunststoffmatrix und das erfindungsgemäße Flammschutzmittel. Der Begriff "Matrix" im Sinne dieser Erfindung umfasst dabei jeden Stoff,

insbesondere jeden Kunststoff bzw. jede Mischung von Kunststoffen, in die das erfindungsgemäße Flammschutzmittel eingearbeitet werden kann oder auf die das erfindungsgemäße Flammschutzmittel als Beschichtung aufgebracht werden kann. Unter Kunststoffen werden Werkstoffe verstanden, die zu ≥ 50 Gew.-%, vorzugsweise ≥ 70 Gew.-% aus Makromolekülen bestehen.

"Makromoleküle" sind Moleküle, die aus einer oder mehreren gleichen oder ähnlichen Struktureinheiten, den konstitutionellen Repetiereinheiten, aufgebaut sind (IUPAC. Compendium of Chemical Terminology, 2nd ed. (the "Gold Book"), A. D. McNaught, A. Wilkinson, Blackwell Scientific Publications, Oxford (1997), S. J. Chalk. ISBN 0-9678550-9-8). Solche Makromoleküle weisen mehr als 10 Repetiereinheiten, vorzugsweise mehr als 15 Repetiereinheiten auf. Die Molmasse beträgt vorzugsweise mindestens 3.000 g/mol, stärker bevorzugt mindestens 5.000 g/mol, noch stärker bevorzugt mindestens 7.000 g/mol und am bevorzugtesten mindestens 10.000 g/mol.

Kunststoffe, die das erfindungsgemäße, vorzugsweise halogenfreie, Flammschutzmittel enthalten, eignen sich in hervorragender Weise nach Verwendung wieder in den Kreislauf zurückgeführt und recycelt zu werden. Insbesondere wenn diese keinen oder nur einen geringen Anteil an Halogenen enthalten.

Es hat sich gezeigt, dass erfindungsgemäße Flammschutzmittel insbesondere bei der Herstellung von Kunststoffzusammensetzungen im Extrusionsverfahren vorteilhaft eingesetzt werden können. Ohne die Verarbeitungseigenschaften der unterschiedlichen Kunststoffmatrizes signifikant zu beeinflussen, können die erfindungsgemäßen Flammschutzmittel in diesen Verfahren problemlos eingearbeitet werden. Bei Verwendung der erfindungsgemäßen Flammschutzmittel werden auch die thermischen und mechanischen Eigenschaften der Kunststoffmatrix nach der Verarbeitung nur wenig beeinflusst.

Kunststoffmatrizes, in denen das Flammschutzmittel verwendet werden kann, sind vorzugsweise ausgewählt unter gefüllten und ungefüllten Vinyl-Polymeren, Olefin-Copolymeren, thermoplastischen Elastomeren auf Olefinbasis, vernetzten thermoplastischen Elastomeren auf Olefinbasis, Polyurethanen, gefüllten und ungefüllten Polyestern und Copolyestern, Styrol-Blockcopolymeren, gefüllten und ungefüllten Polyamiden und Copolyamiden, Polycarbonaten und Poly(meth)acrylaten. Besonders bevorzugt ist der Einsatz in Polymethacrylaten und Polyacrylaten, am bevorzugtesten in Polymethylmethacrylaten. In diesem Zusammenhang ist es besonders vorteilhaft, dass der Zusatz des erfindungsgemäßen Flammschutzmittels zu einem transparenten Polymethacrylat bzw. Polyacrylat führt.

Prinzipiell sind die erfindungsgemäßen Flammschutzmittel jedoch für alle beliebigen Kunststoffmatrizes verwendbar. Sie eignen sich für Polyamide (PA), Polyester wie Polybutylenterephthalat (PBT), Polyethylenterephthalat (PET), Polyolefine, wie Polypropylen (PP), Polyethylen (PE), Polystyrol (PS), Styrol-Blockcopolymere, wie ABS, SBS, SEES, SEPS, SEEPS und MBS, Polyurethane (PU), insbesondere PU Hart- und Weichschäume, Poly(meth)acrylate, Polycarbonate, Polysulfone, Polyetherketon, Polyphenylenoxid, Polyphenylensulfid, Epoxidharze, Polyvinylbutyral (PVB), Polyphenylenoxid, Polyacetal, Polyoxymethylen, Polyvinylacetal, Polystyrol, Acryl-Butadien-Styrol (ABS), Acrylnitril-Styrol-Acrylester (ASA), Polycarbonat, Polyhydroxyalkanoat (PHA), Polybutylensuccinat (PBS), Polyethersulfon, Polysulfonat, Polytetrafluoroethylen (PTFE), Polyharnstoff, Formaldehydharze, Melaminharze, Polyetherketon, Polyvinylchlorid, Polylactid, Silikone, Polysiloxan, Phenolharze, Poly(imid), Bismaleimid-Triazin, Thermoplastische Elastomere (TPE), Thermoplastische Elastomere auf Urethanbasis (TPU-U), thermoplastisches Polyurethan, Copolymere, Kautschuke und/oder Mischungen der vorgenannten Polymere.

Besonders geeignet ist der Einsatz des erfindungsgemäßen Flammschutzmittels in Kunststoffmatrizes, die bei besonders hohen Temperaturen verarbeitet werden, wie beispielsweise Polyamiden oder Polyestern, besonders bevorzugt ist der Einsatz in PA 6.6 oder PA 6 oder auch in den Hochtemperatur-Polyamiden, wie Polyamid 4.6, teilaromatischen Polyamiden und Polyamid 12. Aufgrund der hohen Thermostabilität des erfindungsgemäßen Flammschutzmittels kann dieses auch für solche Kunststoffe verwendet werden. Besonders bevorzugt ist der Einsatz in technischen Kunststoffen die glasfaserverstärkt sind, insbesondere glasfaserverstärktes PA 6, PA 66, glasfaserverstärkte Mischungen derselben und glasfaserverstärktes PBT.

In einer bevorzugten Ausführungsform ist die Kunststoffmatrix ausgewählt unter gefüllten oder ungefüllten und/oder verstärkten Polyamiden, Polyestern, Polyolefinen und Polycarbonaten. Unter einer gefüllten Kunststoffmatrix versteht man dabei eine Kunststoffmatrix, die einen oder mehrere Füllstoffe enthält, insbesondere solche, die ausgewählt sind aus der Gruppe, bestehend aus Metallhydroxiden, insbesondere Erdalkalimetallhydroxiden, Alkalimetallhydroxiden und Aluminiumhydroxiden, Silikaten, insbesondere Schichtsilikaten und funktionalisierten Schichtsilikaten wie Nanocompositen, Bentonit, Erdalkalimetallsilikaten und Alkalimetallsilikaten, Carbonaten, insbesondere Kalziumcarbonat, sowie Talk, Ton, Glimmer, Kieselerde, Kalziumsulfat, Bariumsulfat, Aluminiumhydroxid, Magnesiumhydroxid, Glasfasern, Glaspartikeln und Glaskugeln, Holzmehl, Zellulosepulver, Ruß, Graphit, Böhmit und Farbstoffen.

Alle aufgeführten Füllstoffe können sowohl in für Füllstoffe üblicher Form und Größe, die dem Fachmann bekannt sind, als auch in nanoskaliger Form, d.h. als Partikel mit einem durchschnittlichen Durchmesser im Bereich von ungefähr 1 bis ungefähr 200 nm, vorliegen und in den Kunststoffzusammensetzungen verwendet werden.

Zur Verstärkung der Kunststoffzusammensetzung und zur Erhöhung ihrer mechanischen Stabilität werden vorzugsweise Glasfasern als Füllstoff zugegeben.

In einer bevorzugten Ausführungsform ist das Flammschutzmittel in einer Menge von 1 bis 40 Gew.-%, stärker

bevorzugt zwischen 1 und 30 Gew.-%, besonders bevorzugt 1 bis 25 Gew-%, bezogen auf das Gesamtgewicht der Kunststoffzusammensetzung mit Flammschutzmittel, eingebracht.

Diese Mengenverhältnisse bewirken eine gute Flammschutzwirkung und verhindern gleichzeitig eine signifikante Veränderung der Eigenschaften der Kunststoffmatrix sowohl bei der Verarbeitung als auch bei der Verwendung, insbesondere im Hinblick auf die mechanischen Eigenschaften und die Wärmeformstabilität.

Das Flammschutzmittel kann durch verschiedene Verfahren in das zu schützende Matrixmaterial, insbesondere das Kunststoffmatrixmaterial, eingebracht werden. Zunächst einmal kann das Flammschutzmittel während des Formungsprozesses eingearbeitet werden. Wird das Kunststoffmatrixmaterial beispielsweise durch Extrusion verarbeitet, kann das Flammschutzmittel im Extrusionsprozess, z.B. als leicht dosierbare Pulvermischung, als Granulat oder mittels eines Masterbatches, zugeführt werden. Ein Masterbatch im Sinne der vorliegenden Erfindung ist ein Polymermaterial in der Form von Granulat oder Pulver, welches das Flammschutzmittel und die ggf. weiteren Zusatzstoffe in Konzentrationen enthält, die höher sind als in der Endanwendung. Der Masterbatch oder verschiedene Masterbatches werden zur Herstellung der Kunststoffzusammensetzung mit Kunststoffmatrixmaterial ohne das im Masterbatch enthaltene Flammschutzmittel in solchen Mengen bzw. Verhältnissen vereinigt, sodass das Endprodukt die gewünschte Konzentration des Flammschutzmittels aufweist. Masterbatches haben gegenüber dem Zusatz von verschiedenen Stoffen in Form von Pasten, Pulvern oder Flüssigkeiten den Vorteil, dass sie eine hohe Prozesssicherheit gewährleisten und sehr gut zu verarbeiten und dosieren sind. Durch die Extrusion wird das Flammschutzmittel gleichmäßig in der Kunststoffmatrix verteilt.

Das Einbringen der Zusammensetzung in das Polymermaterial kann mittels geeigneter Analysentechniken, insbesondere NMR-Spektroskopie oder IR-Spektroskopie, nachgewiesen werden.

Die Erfindung betrifft auch ein Polyphosphatsalz, wie es in den Ansprüchen 1 bis 10, vorzugsweise den Ansprüchen 2 bis 10, definiert ist, insbesondere ein Polyphosphatsalz, welches Kationen von mindestens zwei 1,3,5-Triazinverbindungen aufweist, wobei eine der mindestens einen 1,3,5-Triazinverbindung Melamin ist und wobei eine weitere der mindestens zwei 1,3,5-Triazinverbindungen ein Kondensationsprodukt von Melamin, vorzugsweise Melam, ist.

Die Erfindung betrifft auch die Verwendung eines Kondensationsproduktes von Melamin zur Erhöhung der Flammschutzwirkung und/oder der Stabilität und/oder Verarbeitbarkeit eines Polyphosphatsalzes, das vorzugsweise Kationen von Melamin umfasst.

Die Erfindung betrifft auch die Verwendung des erfindungsgemäßen Flammschutzmittels zur Flammschutzausrüstung von Werkstoffen, insbesondere von Kunststoffmaterialien, vorzugsweise von thermoplastischen Kunststoffmaterialien.

Die vorliegende Erfindung betrifft auch die Verwendung eines erfindungsgemäßen Flammschutzmittels als Beschichtungsmaterial, vorzugsweise als Beschichtungsmaterial für Holz, Metall oder ein Kunststoffmatrixmaterial. Besonders bevorzugt ist die Verwendung für sogenannte naturfaserverstärkte Kunststoffe, vorzugsweise Wood-Plastic-Composites, d.h. Kompositmaterialien aus Holzfasern und Kunststoffen. Unter Beschichten wird gemäß DIN 8580 ein Verfahren verstanden, bei dem eine festhaftende Schicht aus formlosem Stoff auf die Oberfläche eines Werkstückes aufgebracht wird.

## BEISPIELE

### Ausgangsstoffe:

| Name | Hersteller | Reinheit/$M_n$ | CAS |
|---|---|---|---|
| Phosphorsäure | FOSFA | 85 Gew.-% in Wasser | 7664-38-2 |
| Melamin | BASF | 99,9 Gew.-% | 108-78-1 |
| Melam | - | 99,9 Gew.-% | 3576-88-3 |
| Aluminiumdiethylphosphinat Exolit OP 1230 | Clariant | 99,9 Gew.-% | 225789-38-8 |

### Messmethoden:

UL94 Test

Pro Messung wurden jeweils 5 Prüfkörper in einer vertikalen Position eingespannt und an das freie Ende einer

Bunsenbrennerflamme gehalten. Dabei wurden die Brennzeit und auch das Abfallen brennender Teile mit Hilfe eines unter dem Prüfkörper angeordneten Wattebausches bewertet. Die exakte Durchführung der Versuche und der Beflammung mit einer 2 cm hohen Bunsenbrennerflamme wurde nach den Vorgaben der Underwriter Laboratories, Standard UL94, durchgeführt.

Als Ergebnisse sind die Einstufungen in die Brandschutzklassen V-0 bis V-2 angegeben. Dabei bedeutet V-0, dass die Gesamtbrenndauer von 5 getesteten Prüfkörpern weniger als 50 Sekunden betrug und der Wattebausch nicht durch herabtropfende glühende oder brennende Bestandteile des Prüfkörpers entzündet wurde. Die Einstufung V-1 bedeutet, dass die Gesamtbrenndauer von 5 getesteten Prüfkörpern mehr als 50 Sekunden aber weniger als 250 Sekunden betrug und ebenfalls der Wattebausch nicht entzündet wurde. V-2 bedeutet, dass die Gesamtbrenndauer von 5 getesteten Prüfkörpern zwar weniger als 250 Sekunden betrug, der Wattebausch jedoch durch herabtropfende Prüfkörperbestandteile in mindestens einem der 5 Tests entzündet wurde. Die Abkürzung NC steht für "nicht klassifizierbar" und bedeutet, dass eine Gesamtbrenndauer von mehr als 250 Sekunden gemessen wurde. In vielen Fällen der Nicht-Klassifizierbarkeit verbrannte der Prüfkörper vollständig.

Thermogravimetrische Analyse

Thermogravimetrische Analysen (TGA) wurden mit einem Gerät für simultane Thermogravimetrie - Dynamische Differenzkalorimetrie (STA/TG-DSC), Modell STA409 PC/3/H Luxx, Firma Netzsch Gerätebau GmbH, im Bereich von 30 bis 500°C unter Stickstoffatmosphäre mit einer Heizrate von 10 K/min durchgeführt. Die Einwaage der Proben betrug 12-15 mg. Zur Auswertung der TGA Kurven wurde die Software NETZSCH Proteus genutzt.

pH-Wert Bestimmung, Leitfähigkeitsmessung

Die pH-Wert Bestimmung erfolgte gemäß EN ISO 787-9. Hierzu wurde unter Schütteln eine 10 Gew.-% Suspension des erfindungsgemäßen Flammschutzmittels in destilliertem Wasser (Temp. 25°C) hergestellt. Es wurden jeweils zwei parallele Ansätze hergestellt, wobei die Differenz der gemessenen pH-Werte 0,3 Einheiten nicht überschreiten durfte.

Zur Bestimmung wurde ein kombinierter pH-Wert-/Leitfähigkeitssensor eingesetzt (Mettler Toledo, SevenMulti S470 Excellence), sodass simultan zum pH-Wert auch die Leitfähigkeit der obigen Suspension bestimmt werden konnte.

Bestimmung der gebundenen 1,3,5-Triazinverbindungen

Die Bestimmung der Gehalte der an das Polyphosphatsalz in ionischer Form gebundenen 1,3,5-Triazinverbindungen, d.h. von Melamin und dessen Homologe, erfolgte mittels HPLC-UV. Hierzu wurde zunächst der freie Anteil der entsprechenden Verbindungen einer Probe und im Anschluss der gesamte Anteil nach Hydrolyse mit konzentrierter Phosphorsäure ermittelt. Der Gehalt der gebundenen 1,3,5-Triazinverbindungen ergibt sich aus der Differenz. Zur Hydrolyse wurden zwischen 20 und 30 mg (+/- 0,1 mg) einer Probe auf der Analysenwaage in ein 100 ml Becherglas gegeben, mit 85% Phosphorsäure auf 50,00 g aufgefüllt und für 30 min bei 100°C gehalten.

Die Identifizierung der Substanzen erfolgte im UV-Bereich bei einer Wellenlänge von 230 nm durch die Bestimmung der HPLC-Retentionszeiten auf zwei unterschiedlichen Säulenphasen, "reversed phase" und "starker Kationenaustauscher" (vgl. nachfolgende Tabelle).

| | SYNERGI 4u Hydro-RP Reversed phase | PARTISIL 10-SCX Kationenaustauscher |
|---|---|---|
| Ammeline | 2,4 +/- 0,11 min | 3,6 +/ 1,0 min |
| Ammelide | 2,5 +/- 0,11 min | 2,5 +/- 0,2 min |
| Melamin | 2,8 +/- 0,11 min | 4,6 +/- 1,0 min |
| Melem | 19,1 +/- 0,08 min | 2,9 +/- 0,2 min |
| Melam | 41,6 +/- 0,3 min | 11,8 +/- 4,0 min |

Beurteilung Prozessierbarkeit, Flammschutzergebnisse

Die Bestimmung der Prozessierbarkeit erfolgte durch Einarbeitung in PA6 mit üblichen Prozessierungsmitteln während der Extrusion mit einem Doppelschneckenextruder.

Mit Hilfe eines Doppelschnecken-Extruders Modell Process 11, Firma Thermo Fisher Scientific Inc., wurde bei den für PA6 üblichen Extrusionsbedingungen ein Granulat mit einer Korngröße von etwa 3x1x1 mm erzeugt. Der

Extrusionsprozess wurde bei einem Durchsatz von etwa 5 kg/h und einer Schraubengeschwindigkeit von 300 U.p.M. und einer Temperatur der Extrusionszone von circa 280°C durchgeführt. Die Prozessierbarkeit, insbesondere eventuell auftretende Ungleichförmigkeiten und Blasenbildungen, wurden durch eine mikroskopische Untersuchung beurteilt.

Durch anschließendes Heißpressen wurden UL94-konforme Prüfkörper erhalten, die die in unten dargestellter Tabelle aufgeführten Flammschutzeigenschaften aufweisen. Der Gewichtsanteil der synergistischen Flammschutzmischung aus Aluminiumdiethylphosphinat Exolit OP 1230 und dem erfindungsgemäßen Flammschutzmittel (Gewichtsverhältnis 2:1) betrug jeweils 19%.

Bestimmung M/P-Anteile

Die Bestimmung des Gesamtphosphor- und -stickstoffgehaltes zur Berechnung des M/P-Verhältnisses erfolgte wie nachfolgend beschrieben.

Der Gesamtphosphorgehalt wurde über eine photometrische $P_2O_5$-Messung ermittelt. Für diesen Zweck wurde eine Probe mittels eines geschlossenen Säureaufschlusses (65% Salpetersäure) in einem Mikrowellensystem bei einer Maximalleistung von 1.000 Watt für insgesamt 30 Minuten hydrolysiert. Die photometrische Bestimmung erfolgte bei 430 nm gegen einen Reagenzienblindwert.

Die Stickstoffbestimmung erfolgte titrimetrisch. Hierzu wird der in der Probe als Ammonium gebundene Stickstoff durch Zerstörung der organischen Matrix von dieser getrennt. Der oxidativ-saure Aufschluss erfolgt mit konzentrierter Schwefelsäure unter Sieden in einem geschlossenen Aufschlussgerät (Heizbank inklusive Turbosog). Dabei wird organisches Material oxidativ zerstört und das durch Reduktion der konzentrierten Schwefelsäure entstandene $SO_2$ abgezogen. Durch Laugenzugabe wird der Stickstoff im Anschluss in eine wasserdampfflüchtige Form überführt, selektiv abdestilliert und volumetrisch gemessen. Die ausgetriebene Menge wird mittels Titration mit $H_2SO_4$ bestimmt.

**Herstellungsbeispiele**

Erfindungsgemäßes Beispiel I

Ein mit einem Rührer ausgestatteter 100-Liter-Reaktor wurde mit 50 Liter reinem Wasser gefüllt. Unter Rühren wurden 19,9 kg Orthophosphorsäure (85 Gew.-% $H_3PO_4$) bei Raumtemperatur in das Wasser gegeben.

Unter ständigem Rühren wurden bei 50°C dann langsam 20 kg Melamin und 7,18 kg Melam zugegeben. Nach Zugabe wurde durch Erhöhung der Temperatur überschüssiges Wasser verdampft, bis ein Restwassergehalt von ≤ 0,1 Gew.-% in der Mischung erhalten wurde. Das resultierende Phosphatsalz wurde dann auf eine Temperatur von 310°C erhitzt, wodurch die Umsetzung zum Polyphosphat erfolgte.

Erfindungsgemäßes Beispiel II

Ein mit einem Rührer ausgestatteter 100-Liter-Reaktor wurde mit 50 Liter reinem Wasser gefüllt. Unter Rühren wurden 16,2 kg Orthophosphorsäure (85 Gew.-% $H_3PO_4$) bei Raumtemperatur in das Wasser gegeben.

Unter ständigem Rühren wurden bei 50°C dann langsam 20 kg Melamin und 1,37 kg Melam zugegeben. Nach Zugabe wurde durch Erhöhung der Temperatur überschüssiges Wasser verdampft, bis ein Restwassergehalt von ≤ 0,1 Gew.-% in der Mischung erhalten wurde. Das resultierende Phosphatsalz wurde dann auf eine Temperatur von 310°C erhitzt, wodurch die Umsetzung zum Polyphosphat erfolgte.

Vergleichsbeispiel

Ein mit einem Rührer ausgestatteter 100-Liter-Reaktor wurde mit 50 Liter reinem Wasser gefüllt. Unter Rühren wurden 17,4 kg Orthophosphorsäure (85 Gew.-% $H_3PO_4$) bei Raumtemperatur in das Wasser gegeben.

Unter ständigem Rühren wurden bei 50°C dann langsam 20 kg Melamin zugegeben. Nach Zugabe wurde durch Erhöhung der Temperatur überschüssiges Wasser verdampft, bis ein Restwassergehalt von ≤ 0,1 Gew.-% in der Mischung erhalten wurde. Das resultierende Phosphatsalz wurde dann auf eine Temperatur von 310°C erhitzt, wodurch die Umsetzung zum Polyphosphat erfolgte.

Die erhaltenen Flammschutzmittel weisen nachfolgende physikalische Eigenschaften auf:

| Parameter | Beispiel I | Beispiel II | Vergleichsbeispiel |
|---|---|---|---|
| gebundenes Melamin [Gew.-%] | 43,4 | 43,1 | 45,1 |
| gebundenes Melam [Gew.-%] | 19,3 | 3,7 | < 0,25 |

(fortgesetzt)

| Parameter | Beispiel I | Beispiel II | Vergleichsbeispiel |
|---|---|---|---|
| M/P-Verhältnis | 1,27 | 1,21 | 1,05 |
| pH-Wert (10 Gew.-%ig) | 5,44 | 4,77 | 7,04 |
| Leitfähigkeit [mS] | 0,106 | 0,158 | 0,191 |
| TGA 1% Gew.-Verlust [°C] | 380 | - | 369 |
| TGA 2% Gew.-Verlust [°C] | 385 | - | 379 |
| TGA 3% Gew.-Verlust [°C] | 389 | - | 384 |
| TGA 5% Gew.-Verlust [°C] | 395 | - | 391 |
| Prozessierbarkeit PA 66 | ausgezeichnet | gut | eingeschränkt |
| UL-94 | V0 1,6 mm<br>V0 0,8 mm | V0 1,6 mm<br>NC[1] 0,8 mm | NC[1] 1,6 mm |
| [1]Nicht klassifiziert | | | |

**Patentansprüche**

1. **Flammschutzmittel** umfassend ein Polyphosphatsalz, wobei das Polyphosphatsalz Kationen von mindestens einer 1,3,5-Triazinverbindung aufweist, wobei eine der mindestens einen 1,3,5-Triazinverbindung Melamin ist,
**dadurch gekennzeichnet, dass**
das Flammschutzmittel mindestens ein Kondensationsprodukt von Melamin umfasst.

2. **Flammschutzmittel** nach Anspruch 1, wobei das mindestens eine Kondensationsprodukt von Melamin eine der mindestens einen 1,3,5-Triazinverbindung ist, deren Kationen das Polyphosphatsalz aufweist.

3. **Flammschutzmittel** nach einem der vorausgehenden Ansprüche, wobei die Stoffmenge der Kationen von Melamin in dem Flammschutzmittel X beträgt und die Stoffmenge des mindestens einen Kondensationsproduktes von Melamin Y beträgt und wobei der Anteil von Y an der Summe der Stoffmengen X+Y ≥ 1 %, vorzugsweise ≥ 2 % ist.

4. **Flammschutzmittel** nach einem der vorausgehenden Ansprüche, wobei der durchschnittliche Kondensationsgrad n des Polyphosphatsalzes 10 bis 500, vorzugsweise 20 bis 250 beträgt.

5. **Flammschutzmittel** nach einem der vorausgehenden Ansprüche, wobei das mindestens eine Kondensationsprodukt von Melamin vorzugsweise ausgewählt ist aus der Gruppe bestehend aus Melam, Melem oder Melon, vorzugsweise Melam.

6. **Flammschutzmittel** nach einem der vorausgehenden Ansprüche, wobei der pH-Wert einer 10 Gew.%-igen Aufschlämmung des Flammschutzmittels und/oder des Polyphosphatsalzes in Wasser bei 25°C ≥ 5 beträgt.

7. **Flammschutzmittel** nach einem der vorausgehenden Ansprüche, wobei in diesem das Stoffmengenverhältnis der Summe der Stoffmengen der mindestens einen 1,3,5-Triazinverbindung und der Stoffmenge des mindestens einen Kondensationsproduktes von Melamin zu Phosphor ≤ 1,3, vorzugsweise ≤ 1,1 beträgt.

8. **Flammschutzmittel** nach einem der vorausgehenden Ansprüche, wobei die Kationen der mindestens einen 1,3,5-Triazinverbindung ≥ 90% des Gesamtanteils der Kationen des Polyphosphatsalzes ausmachen.

9. **Flammschutzmittel** nach einem der vorausgehenden Ansprüche, wobei die Wasserlöslichkeit des Flammschutzmittels und/oder des Polyphosphatsalzes ≤ 0,1 g /100 ml, vorzugsweise ≤ 0,07 g /100 ml beträgt.

10. **Flammschutzmittel** nach einem der vorausgehenden Ansprüche, wobei die Zersetzungstemperatur des Flammschutzmittels und/oder des Polyphosphatsalzes > 320°C beträgt.

11. **Flammschutzmittel** nach Anspruch 10, wobei dieses als zusätzliche Komponente wenigstens eine Verbindung

ausgewählt aus der Gruppe bestehend aus Phosphinaten, Diphosphinaten wie Aluminiumdiethylphosphinat, Zinkboraten und Zinkphosphaten umfasst.

12. **Kunststoffzusammensetzung** umfassend eine Kunststoffmatrix und ein Flammschutzmittel wie in einem der vorausgehenden Ansprüche definiert.

13. **Polyphosphatsalz** wie in einem der Ansprüche 1 bis 10 definiert.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0002869 A1
- EP 0974588 B1
- EP 1095030 B1


### In der Beschreibung aufgeführte Nicht-Patentliteratur


- *J. Am. Chem. Soc.*, 1956, vol. 78, 5715
- IUPAC. Compendium of Chemical Terminology. **A. D. MCNAUGHT** ; **A. WILKINSON** ; **S. J. CHALK**. Gold Book. Blackwell Scientific Publications, 1997